(19) Europäisches Patentamt
European Patent Office
Office européen des brevets

(11) EP 3 156 779 A1

(12) EUROPEAN PATENT APPLICATION

(43) Date of publication:
19.04.2017 Bulletin 2017/16

(51) Int Cl.:
G01M 11/00 (2006.01)          G01B 11/30 (2006.01)
G02B 6/38 (2006.01)          G01N 21/958 (2006.01)

(21) Application number: 16193791.7

(22) Date of filing: 13.10.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 13.10.2015 US 201514882250

(71) Applicant: FLUKE CORPORATION
Everett
Washington 98203 (US)

(72) Inventors:
• SCHELL, J. David
Everett, Washington 98203 (US)
• KIM, Wonoh
Alpharetta, GA 30005 (US)

(74) Representative: HGF Limited
Fountain Precinct
Balm Green
Sheffield S1 2JA (GB)

(54) THREE-DIMENSIONAL INSPECTION OF OPTICAL COMMUNICATION LINKS

(57) One or more embodiments are directed to camera probes and methods for visually inspecting an endface of an optical communication link, such as a fiber optic cable. Generally described, the camera probes and methods are directed to projecting light to an endface of the optical communication link from a first direction and at a first angle of incidence and projecting light to the endface at a second direction and at a second angle of incidence. A defect on the endface casts a first shadow when the light is projected in the first direction and a second shadow when the light is projected in the second direction. At least one of the first and second shadows is analyzed to determine its length. Using the length of the shadow and the known angle of incidence at which the light is projected, a height or depth of the defect is determined.

FIG.1

**Description**

BACKGROUND

Technical Field

The present disclosure generally pertains to visual inspections of optical communication links.

Description of the Related Art

Optical communication links, such as fiber optic cables, provide high speed transmission of data with relatively low loss. In view of this, optical communication links are often used in telecommunication networks, such as telephone lines, cable systems and the internet. In order to allow for adjustments to a network, such as adding, dropping, or moving optical cables in the network, or for coupling and decoupling to various transmitting and receiving equipment, each end of the fiber optic cables is held by a connector, such as a ceramic ferrule, a bulkhead adapter in a patch panel, etc., that allows for each of coupling and decoupling of the fiber optic cables. The connectors are designed to align the endfaces of the optical fibers of two fiber optic cables to be coupled, and to abut the endfaces of the optical fibers of the fiber optic cables in physical contact with each other.

Performance of the fiber optic cables is affected by the quality of the connection between abutting optical fibers. One element known to affect the quality of the connection is the cleanliness of the endfaces of the optical fibers. For instance, defects between optical fibers of two abutting fiber optic cables may block, diffuse, or misdirect the optical signal traveling from one optical fiber to another abutting optical fiber, thereby affecting the quality of the signal, such as reducing the intensity of the signal or introducing artifacts into the signal. Furthermore, defects may cause damage to endfaces of optical fibers of another fiber optic cable upon coupling of the two fiber optic cables. Defects may include any contamination, artifacts, flaws in the optical fibers, or anything else that may affect an optical signal. Thus, the integrity of the endfaces of optical fibers in a fiber optic cable is of significant importance.

To eliminate or at least reduce problems associated with endface contamination, the endfaces of the optical fibers of the fiber optic cables may be visually inspected to confirm cleanliness. Additionally, the endfaces may be cleaned prior to a visual inspection process.

A visual inspection process typically involves a camera probe that illuminates an endface of optical fibers of a fiber optic cable and obtains images of the endface. The inspection process may include a comparison to endface goodness standards for the intended application of the fiber optic cable. Such standards may be set by the International Electrotechnical Commission (IEC) (e.g., IEC Standard 61300-3-35) or various other organizations that set forth objective requirements for optical communication links, including Telecommunications Industry Association (TIA), Technical Standard Board (TSB), International Organization for Standardization (ISO), and Institute of Electrical and Electronic Engineers (IEEE).

BRIEF SUMMARY

Embodiments are directed to apparatuses and methods for visually inspecting an endface of an optical communication link, such as a fiber optic cable.

One embodiment is directed to a method comprising obtaining a plurality of images of an endface of an optical communication link. Each of the plurality of images is obtained while light is projected at the endface from different directions of each other. At least one of the images includes a shadow cast by a defect on the endface. The method further includes comparing the plurality of images to identify the shadow and determining a dimension of the shadow. The method further includes determining a height or depth of the defect based at least in part on the determined dimension of the shadow and the direction at which the light was projected to the endface in the image including the shadow.

Another embodiment is directed to a method including projecting light in a first direction at a first angle of incidence to an endface of a fiber optic cable. The endface of the fiber optic cable includes a defect that has a height or a depth relative to the endface. The method further includes obtaining a first image of the endface of the fiber optic cable with the light projected in the first direction at the first angle of incidence. The method further includes projecting light in a second direction at a second angle of incidence to the endface of the fiber optic cable and obtaining a second image of the endface of the fiber optic cable with the light projected in the second direction at the second angle of incidence. The method further includes analyzing the first image and the second image to determine the height or depth of the defect.

Another embodiment is directed to a camera probe for visually inspecting an endface of a fiber optic cable. The camera probe includes a first light source configured to project light to the endface in a first direction at a first angle of incidence which causes a defect on the endface to cast a shadow and a second light source configured to project light to the endface in a second direction at a second angle of incidence. The second direction is different from the first direction. The camera probe further includes an image sensor configured to obtain a first image of the endface including the defect and the shadow with the light being projected in the first direction at the first angle of incidence and a second image of the endface with the light being projected in the second direction at the second angle of incidence. The camera probe further includes a processor configured to compare the first image with the second image to identify the shadow, determine a dimension of the shadow, and determine a height or depth of the defect based on the dimension of the shadow and the first angle of incidence.

BRIEF DESCRIPTION OF THE SEVERAL VIEWS OF THE DRAWINGS

Figure 1 is a block diagram illustrating a camera probe for a method of inspecting endfaces of optical communication links in accordance with one embodiment;

Figure 2 is a schematic illustration of another imaging device of the camera probe of Figure 1;

Figures 3A and 3B are schematic illustrations of an exploded view of an image of an endface of a fiber optic cable under inspection;

Figures 4A and 4B illustrate partial cross-section views of the endface of Figures 3A and 3B illustrating the first defect of Figures 3A and 3B;

Figures 5A and 5B illustrate partial cross-section views of the endface of Figures 3A and 3B illustrating the second defect of Figures 3A and 3B; and

Figure 6 illustrates a method of inspecting an endface of an optical communication link in accordance with one embodiment.

DETAILED DESCRIPTION

Embodiments are directed to apparatuses and methods for visually inspecting an endface of an optical communication link, such as a fiber optic cable. Generally described, the apparatus and methods include projecting light to an endface of an optical communication link in a first direction at a first angle of incidence and then projecting light to the endface in a second direction at a second angle of incidence.

In various embodiments, the first and second angles of incidence typically are known angles that are less than normal. Defects on the endface will cast a first shadow when the light is projected in the first direction and a second shadow when the light is projected in the second direction. The shadows are then analyzed to determine whether the defect has a depth or a height. In particular, the shadows are analyzed to determine a length of at least one of the first and second shadows. Using the length of one of the first and second shadows and the known angle of incidence at which the light is projected, a height or depth of the defect may be calculated using trigonometric functions. In another embodiment, however, the light is projected in the second direction at a normal angle of incidence and thus the defect will only cast a shadow when the light is projected in the first direction.

In one embodiment, the analysis may further include generating an image, such as a three-dimensional schematic image, of the endface including any defect(s) on the endface of the optical communication link.

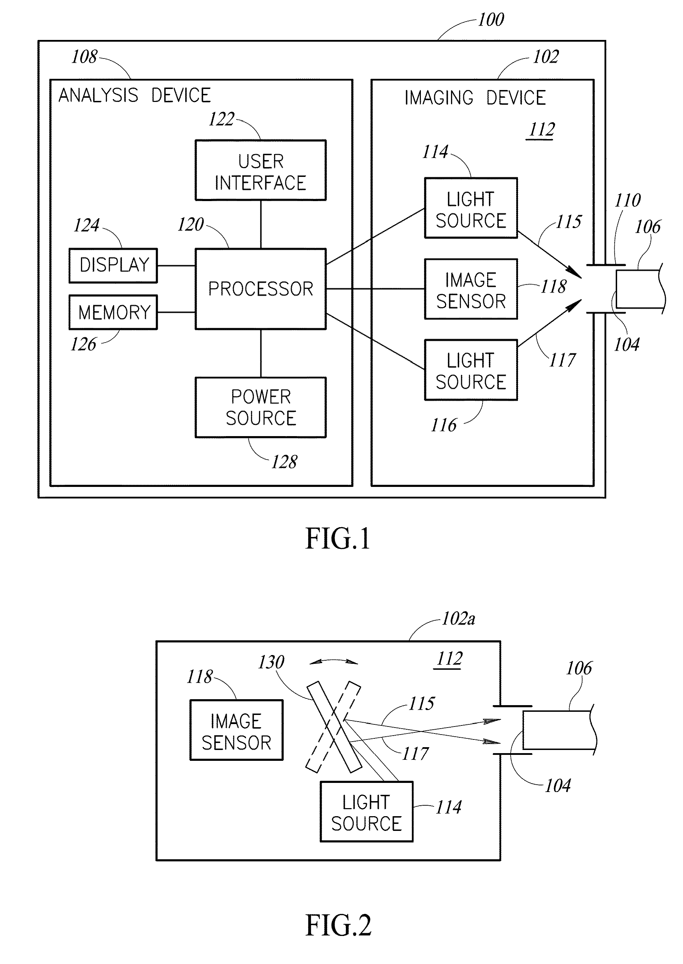

Figure 1 is a block diagram illustration of apparatus, such as an inspection probe or camera probe 100, for inspecting endfaces of optical communication links, such as optical fibers of fiber optic cables. The camera probe 100 includes an imaging device 102 for obtaining images of an endface 104 of a fiber optic cable 106 to be inspected. The imaging device 102 is operably coupled to an analysis device 108 and configured to receive and analyze the images obtained by the imaging device 102. The imaging device 102 includes an interface coupling element 110 (illustrated schematically) configured to mate with various mating components of the fiber optic cable 106 to be inspected. For instance, the interface coupling element 110 may mate with a connector (not shown), such as a ceramic ferrule, a bulkhead adapter in a patch panel, etc., of one or more fiber optic cables 106 to be inspected. The interface coupling element 110 may be configured to mate with the connectors in various ways, such as by male to female coupling, or may include a separable adaptor for coupling to different connectors.

The imaging device 102 includes a cavity 112 and first and second light sources 114, 116, such as light emitting diodes (LEDs), in the cavity 112. The first and second light sources 114, 116 are operable to project light to the interface coupling element 110 and illuminate the endface 104 of the fiber optic cable 106 under inspection. The first and second light sources 114, 116 are arranged in the cavity 112 to project light to the endface 104 at different directions from each other. That is, the first light source 114 projects light in a first direction as indicated by arrow 115 to the endface 104 of the fiber optic cable 106 under inspection. The projected light is projected to the endface 104 at a known angle of incidence that is less than normal. Similarly, the second light source 116 projects light in a second direction as indicated by arrow 117 to the endface 104 of the fiber optic cable 106 under inspection. Similarly, the projected light is projected to the endface 104 at a known angle of incidence that is less than normal. In at least one embodiment, however, only the light from the first light source 114 is projected at an angle of incidence that is less than normal, as will be clear to a person of ordinary skill in the art in view of the discussion below.

In one embodiment, the first and second light sources 114, 116 project the light to the endface 104 from opposite directions from each other and having the same angle of incidence as measured from an axis that is normal to the endface. Although not shown, the imaging device 102 may further include optical elements configured to filter and/or direct the light from the first and second light sources 114, 116 to the endface 104 in the first and second directions.

The imaging device 102 further includes a camera or optical image sensor 118 arranged in the cavity 112 for obtaining images of the endface 104 of the fiber optic cable 106 under inspection. As indicated above, the imaging device 102 is operatively coupled to the analysis device 108 and provides the obtained images of the endface 104 to the analysis device 108.

The analysis device 108 includes a processor 120 operably coupled to a user interface 122, a display 124, a memory 126, and a power source 128. The processor 120 of the analysis device 108 is operably coupled to the image sensor 118 and the first and second light sources 114, 116 of the imaging device and includes suitable programming logic operable to activate and deactivate the first and second light sources 114, 116 and the image sensor 118. The processor 120 is further configured to receive imaging data of images obtained from the image sensor 118 and includes suitable programming logic to process data received from the imaging device 102. The processor 120 is configured to store the imaging data in the memory 126. The processor 120 also includes suitable programming logic to analyze the image data and store, in the memory 126, information such as a determined size and location of any defects observed in images obtained by the image sensor 118. A processor may include suitable programming logic as described herein, and thus be configured to perform one or more functions, by operating in accordance with one or more software commands that are executed, e.g., by one or more general purpose computer processors; by operating in accordance with specialized logic implemented, e.g., by specialized circuitry (an ASIC, FPGA, etc.); or by operating in accordance with one or more hardware elements that are arranged to perform the desired function(s).

The display 124 of the analysis device 108 is configured to display the images of the endface 104 under inspection received by the processor 120 from the image sensor 118. The display 124 may also display images and information generated by the analysis device 108.

The user interface 122 may include the display, keyboard, knobs, and buttons that allow a user to interact with the processor 120, such as to cause the processor 120 to activate or deactivate the first and second lights sources 114, 116 or to capture an image of the endface 104 of the fiber optic cable 106 under inspection, or to operate other components of the camera probe.

The power source 128, which can be a battery or a plug for coupling to a main power supply, provides power for operating the camera probe 100. Although Figure 1 shows the camera probe 100 as a single unit, it is to be appreciated that the imaging device 102 and the analysis device 108 may be separate components that are coupled together by a wire or wirelessly coupled. As separate components, the imaging device 102 may include its own power source or may be powered by the analysis device 108.

In operation, the first light source 114 is activated by the processor 120, such as in response to receiving a signal from the processor 120, and directs light in a first direction as indicated by arrow 115 to the endface 104 of the fiber optic cable 106 under inspection. The light enters the endface 104 of the fiber optic cable 106 at a first angle of incidence that is less than normal. The image sensor 118 obtains one or more images of the endface 104 of the fiber optic cable 106. In particular, the image sensor 118 is configured to capture a first image of the endface 104 in response to receiving a signal from the processor 120. The image sensor 118 sends image data associated with the captured first image to the processor 120, which may cause the image data to be stored in the memory 126.

The first light source 114 is deactivated, such as in response to receiving a signal from the processor 120, and the second light source 116 is activated and directs light in a second direction as indicated by arrow 117 to the endface 104 of the fiber optic cable 106 under inspection. The light enters the endface 104 of the fiber optic cable 106 at a second angle of incidence that is less than normal. The image sensor 118 captures a second image of the endface 104 of the fiber optic cable 106 in response to receiving a signal from the processor 120. The image sensor 118 sends image data associated with the captured second image to the processor 120, which may cause the image data to be stored in the memory. As will be clear to persons of ordinary skill in the art, the processor 120 may perform any of the above-mentioned actions automatically and/or in response to instructions received by a user via the user interface 122.

As indicated above, the first and second angles of incidence at which light is projected to the endface 104 are angles that are less than normal. In one embodiment, the first and second angles are the same angle of incidence (measured from normal), though in other embodiments, the first and second angles of incidence may be different. In one embodiment, the light is directed to the endface 104 in opposite directions, that is, opposed by about 90°. As will be explained in more detail below, any defects on the endface 104 of the fiber optic cables 106 may cast shadows when the light is directed to the endface at an angle of incidence that is less than normal. One or more dimensions of the shadows may be measured, which will be used to determine a depth or a height of the corresponding defects located on the endface.

Although the imaging device 102 of Figure 1 includes only two light sources, it is to be appreciated that the imaging device may include a greater number of light sources, each arranged to direct light at the endface under test at different directions and at known angles of incidence, at least one of which is less than normal.

Figure 2 is an exemplary schematic illustration of another imaging device 102a that can be used in the camera probe 100 of Figure 1. It is to be appreciated that the imaging device 102a of Figure 2 is similar in structure and operation to the imaging device 102 of Figure 1 and thus only differences will be discussed in the interest of brevity.

The imaging device 102a of Figure 2 is also configured to project light to an endface 104 of a fiber optic cable 106 under inspection at different directions and angles of incidence; however, the imaging device 102a of Figure 2 includes a single light source 114, rather than a plurality of light sources. The light source 114 is arranged in a cavity 112 of the imaging device 102a and directs light to a moveable optical element, such as a moveable mirror 130. For instance, the mirror 130 may be arranged to pivot about a first axis between a first position (shown in dashed lines) and a second position (shown in solid line). The amount that the mirror 130 may pivot about the first axis may vary, depending on the position of the light source and the different desired angles of incidence.

In the first position, the mirror 130 reflects the light projected from the light source 114 to the endface 104 of the fiber optic cable 106 under inspection so that the light is directed in a first direction as indicated by arrow 115 at a first angle of incidence. In the second position, the mirror 130 reflects the light projected from the light source 114 to the endface 104 of the fiber optic cable 106 under inspection so that the light is directed in a second direction as indicated by arrow 117 at a second angle of incidence. As will be clear to persons of ordinary skill in the art, the mirror 130 may be arranged in the cavity 112 to pivot to a number of different positions to project light to the endface 104 at different directions, including a position that directs light to the endface at a normal angle of incidence. Additionally, the mirror 130 may be arranged in the cavity 112 to pivot about a second axis that is perpendicular to the first axis to direct light in different directions.

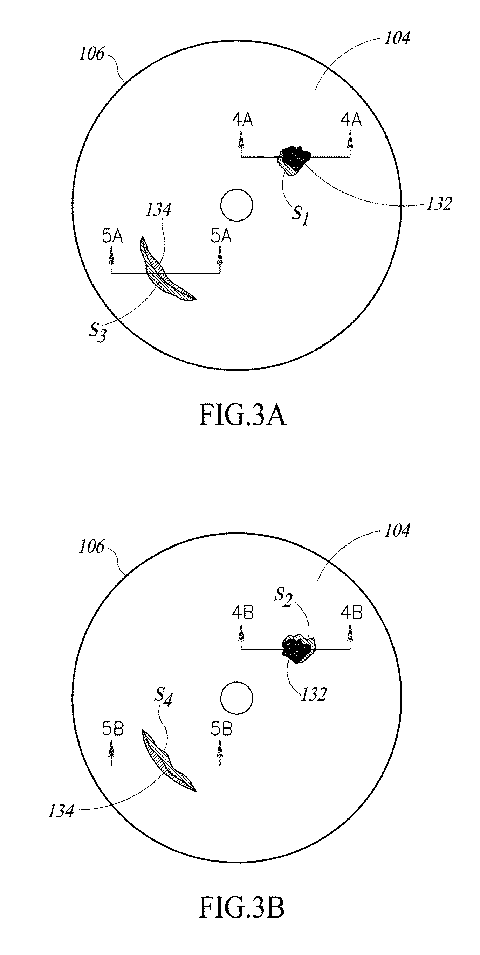

Figures 3A and 3B are schematic illustrations of an endface 104 of a fiber optic cable 106 under inspection by a camera probe, such as the camera probe 100 of Figure 1. Figure 3A illustrates an image of the endface 104 of the fiber optic cable 106 obtained by the camera probe 100 with the light being projected in the first direction (115 of Figure 1) at the first angle of incidence, while Figure 3B illustrates an image of the endface 104 of the fiber optic cable 106 obtained by the camera probe with the light being projected in the second direction (117 of Figure 1) at the second angle of incidence.

As shown in Figures 3A and 3B, the endface 104 of the fiber optic cable 106 includes a first defect 132 and a second defect 134. The first and second defects 132, 134 may absorb, block, reflect, refract or combinations thereof at least some of the light being projected to the endface 104. Thus, the first and second defects 132, 134 appear gray or darker in the image than areas of the endface 104 without defects. The defects on the endface may be a scratch, pit, chip, contamination, such as dirt or epoxy, or any other defect or contamination that may occur on an endface of an optical communication link. The processor 120 includes programming logic for determining the dimensions and locations of the defects, such as the first and second defects 132, 134, and for storing the determined dimensions and locations in the memory 126.

As will be explained in more detail below, the light blocked or absorbed by the first defect 132 creates a first shadow $S_1$ on the endface 104 when the light is projected in the first direction, and a second shadow $S_2$ on the endface 104 when the light is projected in the second direction. Similarly, the second defect 134 causes a third shadow $S_3$ to form on the endface 104 when the light is projected in the first direction and a fourth shadow $S_4$ when the light is projected in the second direction.

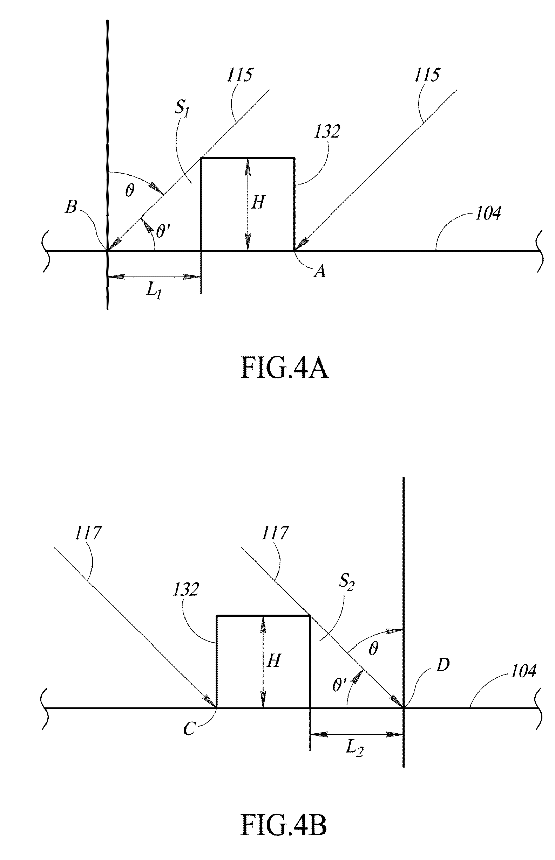

Figure 4A is a schematic illustration of an exploded partial cross-section view of the endface 104 at the first defect 132 in Figures 3A, that is, with the light directed to the endface 104 in the first direction as indicated by arrows 115 at the first angle of incidence, angle θ. Figure 4B is a schematic illustration of an exploded partial cross-section view of the endface 104 at the first defect 132 in Figure 3B, that is, with light directed to the endface in the second direction as indicated by arrows 117 at the second angle of incidence, angle θ. In the illustrated embodiment, the first and second angles of incidence are the same angle, angle θ. As shown in Figures 4A and 4B, the direction of the light projected from the light source to the endface 104 in Figure 4A is about 90° from the direction of the light projected toward the endface 104 in Figure 4B. In other embodiments, however, the light may projected at other angles, such as, for example only, any angles between 60° and 140°. It will be appreciated that the angle at which the light is projected may be determined based on an expected height or depth of the defect.

Figures 4A and 4B show the first defect 132 has a height H relative to the endface 104. In reference to Figure 4A, due to the light being projected in the first direction as indicated by arrows 115 at the first angle of incidence, angle θ, the defect casts a shadow $S_1$ that is to the left of the first defect 132. That is, light projected at the first defect 132 is blocked by the height H of the first defect 132, thereby casting the shadow $S_1$. In reference to Figure 4B, due to the light being projected in the second direction as indicated by arrows 117 at the second angle of incidence, angle θ, the first defect 132 casts a shadow $S_2$ that is to the right of the first defect 132.

Although the shadows $S_1$, $S_2$ may be difficult to distinguish from the first defect 132 itself as displayed on the display device of the camera probe, the images may be compared and analyzed by the processor 120 to distinguish the shadows $S_1$, $S_2$ from the first defect 132. For instance, the processor 120 may include suitable programming logic to compare the first and second images to identify the shadows $S_1$, $S_2$ corresponding to the first defect 132. In one embodiment, the processor 120 includes suitable programming logic for overlaying the first and second images to distinguish the defects from the shadows. For example, a dark area found in both the first and second images may be attributed to the defect, and dark areas observed in only one or the other of the first and second images may be considered shadows. After the first defect is distinguished from one or both of the shadows $S_1$, $S_2$, the processor determines a length of one or both of the shadows $S_1$, $S_2$. Although the proces-

sor 120 may use any number of ways to determine the length of the shadows, one method will be discussed below.

With reference to Figure 4A, point A is located on the right of the first defect 132 at a first edge and point B is an end of the shadow $S_1$ cast by the height H of the first defect 132. As illustrated in the image, light is directed to the endface 104 at point A and point B, while the first defect 132 reflects, refracts, absorbs (or a combination thereof) light that is directed at the first defect 132 between points A and B. With reference to Figure 4B, point C is located on the left side of the first defect 132 at a first edge and point D is an end of the shadow $S_2$ cast by the height H of the first defect on the right side. Again, light is directed to the endface at point C and point D, while the first defect reflects, refracts, absorbs (or a combination thereof) light that is directed at the first defect 132 between points C and D.

Measurements of the points A through D relative to one another may be obtained. For instance, the processor 120 may include suitable programming logic for implementing measuring, including measuring on the display 124 of the camera probe 100 as is well known in the art. A length of the shadow $S_1$ is determined by the difference between point B and point C.

That is,

$$L_1 = B - C$$

Similarly, a length of the shadow $S_2$ is determined by the difference between D and A.

That is,

$$L_2 = D - A$$

Using a length of the shadow $S_1$ and the known angle of incidence of the light, angle θ, the height H of the first defect 132 may be determined using trigonometry. In particular, the height H of the first defect 132 may be determined by the trigonometric function tangent.

$$\text{Tangent } \theta' = \text{opposite / adjacent.}$$

Thus,

$$\tan \theta' = \frac{H}{L_1}$$

or

$$\tan \theta' = \frac{H}{L_2}$$

As discussed above, the angle of incidence, angle θ, is known. Thus, angle θ' is determined by 90° - θ = θ'. $L_1$ and $L_2$ are determined as discussed above. Thus, the height H of the first defect can be determined by:

$$H = \tan \theta' * L_1$$

or

$$H = \tan \theta' * L_2$$

Although not shown, the height H of the first defect 132 may not be consistent at each of the opposing sides of the defect, thus in some embodiments two different heights of the defect may be determined.

The processor 120 may include suitable programming logic to compare the height H of the first defect 132 on the endface 104 under inspection to a threshold value. The threshold value may be a value that is known to affect the quality of light being transmitted through a fiber optic cable. Furthermore, the height H may be analyzed in conjunction with the two-dimensional size of the defect, such as the size of the first defect 132 as shown in Figures 3A and 3B. By determining the three-dimensional size of defects on the endfaces of optical communication links, the effects of the defects, such as on signal propagation through optical communication link, can be more readily evaluated.

The processor 120 may include suitable programming logic to generate a signal indicative of whether the endface 104 satisfies or fails to satisfy such standards, and to provide the generated signal to the user interface 122, such as the display, of the camera probe 100. Furthermore, the processor 124 may include suitable programming logic to store the determined height or depth of the defect in the memory 126.

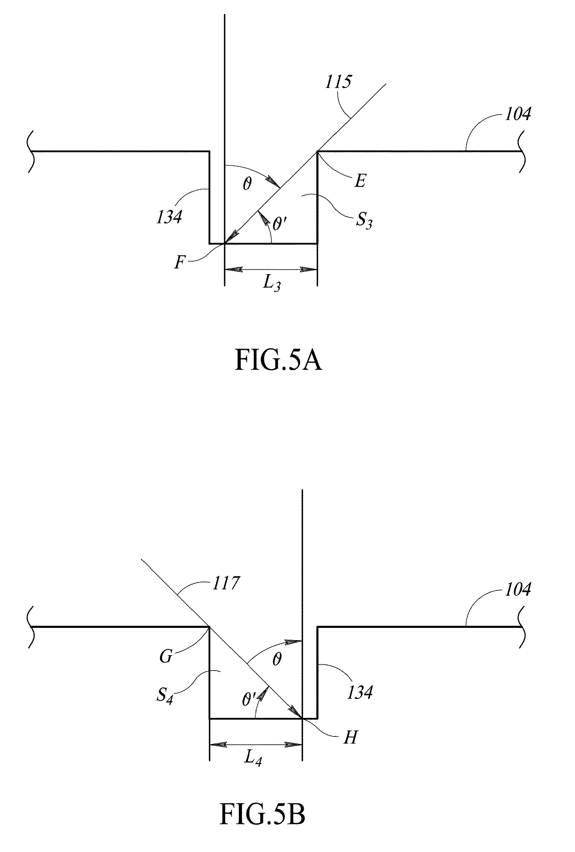

Figure 5A is a schematic illustration of an exploded partial cross-section view of the endface 104 at the second defect 134 in Figure 3A, that is, with the light directed to the endface 104 in the first direction as indicated by arrow 115 at the first angle of incidence, angle θ. Figure 5B is a schematic illustration of an exploded partial cross-section view of the endface 104 at the second defect 134 in Figure 3B, that is, with light directed to the endface 104 in the second direction as indicated by arrow 117 at the second angle of incidence, angle θ. As shown in Figures 5A and 5B, the second defect 134 is illustrative of a scratch, pit, or chip forming a recess at the endface 104 of the fiber optic cable under inspection. Referring to Figure 5A, when light is projected to the endface 104, the second defect 134 casts a shadow $S_3$ having a first dimension $L_3$, and when light is projected in the second direction, the second defect 134 casts a shadow $S_4$ having a dimension $L_4$.

With reference to Figure 5A, point E is located on the right of the second defect 134 at a first edge and point F is an end of the shadow $S_3$ at a bottom of the recess produced by a wall of the recess of the second defect 134. With reference to Figure 5B, point G is located on the left side of the second defect 134 at a second edge and point H is an end of the shadow $S_4$ at a bottom of the recess produced by a wall of the recess of the second defect 134. The lengths $L_3$ and $L_4$ can be determined using the same methods discussed above in reference to Figures 4A and 4B.

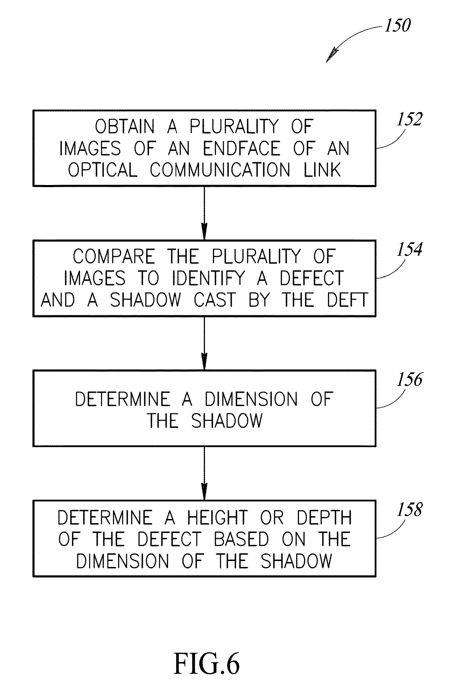

Figure 6 illustrates a method 150 of inspecting an endface of an optical communication link, such as the endface of the fiber optic cable of Figure 1, in accordance with one embodiment. The method includes obtaining a plurality of images, such as first and second images, of the endface of the optical communication link as indicated by block 152. The images are obtained while light is projected to the endface in different directions from each other. The light is projected at known angles of incidence and at least in one case is less than normal. The obtained images may be captured and stored.

The method includes comparing the images to identify a defect on the endface and shadows cast by the defect on the endface as indicated by block 154. The comparison may include superimposing the images on each other or any other methods for comparing image data. During the comparison at least one shadow cast by the defect in a particular image may be identified.

A dimension of the shadow is determined as indicated by block 156. Using the dimension of the shadow, a height or depth of the defect is determined as indicated by block 158. In particular, the height or depth of the defect may be determined using the known angle of incidence of the light and the dimension of the shadow as discussed above. The method may further include generating a three-dimensional image of the endface and the defects and displaying the three-dimensional image on a display device.

While the foregoing description illustrates and describes the inspection probe or camera probe 100 as using a single processor, it should be understood that other circuitry may be coupled to the processor or other components in the camera probe may be configured to perform the programming logic described herein. Furthermore, the light in the first direction may be directed to the endface at a normal angle of incidence, while light in the second direction may be directed to the endface at a known angle that is less than normal. In that regard, the shadow cast when the light is directed in the second direction may be readily obtained and measured during the comparison, and the height, depth, and/or location of the defect may be determined therefrom.

Examples provide a method comprising obtaining a plurality of images of an endface of an optical communication link, each of the plurality of images being obtained while light is projected at the endface from different directions of each other, and at least one of the images including a shadow cast by a defect on the endface, comparing the plurality of images to identify the shadow, determining a dimension of the shadow, and determining a height or depth of the defect based at least in part on the determined dimension of the shadow and the direction at which the light was projected to the endface in the image including the shadow.

In some examples, the optical communication link is a fiber optic cable coupled to a connector.

In some examples, when the light is projected at the endface from different directions of each other, the light is projected at the endface at angles of incidence having the same magnitude as each other as measured from an axis normal to the endface.

In some examples, determining the height or depth of the defect is further based on at least one of the angles of incidence.

In some examples, determining the height or depth of the defect includes using a trigonometric function to determine the height or depth of the defect.

In some examples, obtaining the plurality of images of the endface comprises directing light in a first direction and at a first angle of incidence to the endface while capturing at least a first image of the endface, and directing light in a second direction and at a second angle of incidence to the endface while capturing at least a second image of the endface.

In some examples, the first direction is about 90 degrees from the second direction.

Some examples further comprise using the determined height or depth to generate a three-dimensional image of the defect.

Examples provide a method comprising projecting light in a first direction at a first angle of incidence to an endface of a fiber optic cable, the endface of the fiber optic cable including a defect that has a height or a depth relative to the endface, obtaining a first image of the endface of the fiber optic cable with the light projected in the first direction at the first angle of incidence, projecting light in a second direction at a second angle of incidence to the endface of the fiber optic cable, obtaining a second image of the endface of the fiber optic cable with the light projected in the second direction at the second angle of incidence, and analyzing the first image and the second image to determine the height or depth of the defect.

Some examples further comprise using the determined height or depth of the defect to generate a three-dimensional image of the defect on the endface of the fiber optic cable and displaying the three-dimensional image on a display.

Some examples further comprise determining whether the endface of the fiber optic cable passes a visual inspection test based at least in part on the three-dimensional image.

In some examples, obtaining the first image comprises capturing and storing the first image, and wherein obtaining the second image comprises capturing and storing the second image.

In some examples, analyzing the first image and the second image to determine the height or depth of the defect comprises identifying a shadow cast the by defect in at least one of the first and second images, measuring a length of the shadow, and determining the height or depth of the defect using the measured length of the shadow and the angle of incidence of the light projected in the image in which the shadow was identified.

In some examples, the first and second angles of incidence have the same magnitude as measured from an axis normal to the endface.

In some examples, the light projected in the second direction is projected about 90 degrees from the light projected in the first direction.

Examples provide a camera probe for visually inspecting an endface of a fiber optic cable, the camera probe comprising a first light source configured to project light to the endface in a first direction at a first angle of incidence which causes a defect on the endface to cast a shadow, a second light source configured to project light to the endface in a second direction at a second angle of incidence, the second direction being different from the first direction, an image sensor configured to obtain a first image of the endface including the defect and the shadow with the light being projected in the first direction at the first angle of incidence and a second image of the endface with the light being projected in the second direction at the second angle of incidence, and a processor configured to compare the first image with the second image to identify the shadow, determine a dimension of the shadow, and determine a height or depth of the defect based on the dimension of the shadow and the first angle of incidence.

In some examples the second angle of incidence is less than normal.

In some examples the processor is configured to determine the height or depth of the defect by using a trigonometric function that includes the dimension of the shadow and the first angle of incidence.

In some examples the processor is configured to generate a three-dimensional image of the defect on the endface of the fiber optic cable and to cause a display to display the three-dimensional image.

In some examples, determining the dimension of the shadow comprises comparing a dimension of the defect in the first image with a dimension of the defect in the second image.

In some examples, the first light source and the second light source are the same light source.

Some examples also including an optical element arranged to move between a first position in which the optical element directs light from the light source to the endface in the first direction at the first angle of incidence and a second position in which the optical element directs light from the light source to the endface in the second direction at the second angle of incidence.

Some examples further comprise an imaging device that includes the first and second light sources and the image sensor, and an analysis device operably coupled to the imaging device and including the processor.

The various features and embodiments described above can be combined in any manner to provide further embodiments. These and other changes can be made to the embodiments in light of the above-detailed description. In general, in the following claims, the terms used should not be construed to limit the claims to the specific embodiments disclosed in the specification, but should be construed to include all possible embodiments along with the full scope of equivalents to which such claims are entitled. Accordingly, the claims are not limited by the specific embodiments disclosed.

**Claims**

1. A method comprising:

   obtaining a plurality of images of an endface of an optical communication link, each of the plurality of images being obtained while light is projected at the endface from different directions of each other, and at least one of the images including a shadow cast by a defect on the endface;
   comparing the plurality of images to identify the shadow;
   determining a dimension of the shadow; and
   determining a height or depth of the defect based at least in part on the determined dimension of the shadow and the direction at which the light was projected to the endface in the image including the shadow.

2. The method of Claim 1, wherein the optical communication link is a fiber optic cable coupled to a connector.

3. The method of Claim 1 or 2, wherein when the light is projected at the endface from different directions of each other, the light is projected at the endface at angles of incidence having the same magnitude as each other as measured from an axis normal to the endface.

4. The method of Claim 3, wherein determining the height or depth of the defect is further based on at least one of the angles of incidence.

5. The method of Claim 4, wherein determining the height or depth of the defect includes using a trigonometric function to determine the height or depth of the defect.

6. The method of any preceding Claim, wherein obtaining the plurality of images of the endface comprises:

directing light in a first direction and at a first angle of incidence to the endface while capturing at least a first image of the endface; and directing light in a second direction and at a second angle of incidence to the endface while capturing at least a second image of the endface; and optionally

wherein the first direction is about 90 degrees from the second direction.

7. The method of any preceding Claim, further comprising using the determined height or depth to generate a three-dimensional image of the defect.

8. The method of Claim 1, wherein obtaining the plurality of images of the endface of the optical communication link comprises:

projecting light in a first direction at a first angle of incidence to the endface, the endface including a defect that has a height or a depth relative to the endface; obtaining a first image of the endface with the light projected in the first direction at the first angle of incidence; projecting light in a second direction at a second angle of incidence to the endface; and obtaining a second image of the endface with the light projected in the second direction at the second angle of incidence.

9. A camera probe for visually inspecting an endface of a fiber optic cable, the camera probe comprising:

a first light source configured to project light to the endface in a first direction at a first angle of incidence which causes a defect on the endface to cast a shadow; a second light source configured to project light to the endface in a second direction at a second angle of incidence, the second direction being different from the first direction; an image sensor configured to obtain a first image of the endface including the defect and the shadow with the light being projected in the first direction at the first angle of incidence and a second image of the endface with the light being projected in the second direction at the second angle of incidence; and a processor configured to compare the first image with the second image to identify the shadow, determine a dimension of the shadow, and determine a height or depth of the defect based on the dimension of the shadow and the first angle of incidence.

10. The camera probe of Claim 9, wherein the second angle of incidence is less than normal.

11. The camera probe of Claim 9 or 10, wherein the processor is configured to:

determine the height or depth of the defect by using a trigonometric function that includes the dimension of the shadow and the first angle of incidence; and/or generate a three-dimensional image of the defect on the endface of the fiber optic cable and to cause a display to display the three-dimensional image.

12. The camera probe of any of Claims 9 to 11, wherein determining the dimension of the shadow comprises comparing a dimension of the defect in the first image with a dimension of the defect in the second image.

13. The camera probe of any of Claims 9 to 12, wherein the first light source and the second light source are the same light source.

14. The camera probe of Claim 13, further including an optical element arranged to move between a first position in which the optical element directs light from the light source to the endface in the first direction at the first angle of incidence and a second position in which the optical element directs light from the light source to the endface in the second direction at the second angle of incidence.

15. The camera probe of any of Claims 9 to 14, further comprising:

an imaging device that includes the first and second light sources and the image sensor; and an analysis device operably coupled to the imaging device and including the processor.

FIG.1

FIG.2

EP 3 156 779 A1

FIG.3A

FIG.3B

11

FIG.4A

FIG.4B

*115*

*104*

*E*

θ

*134*

*S₃*

θ'

*F*

$L_3$

# FIG.5A

*117*

*104*

*G*

θ

*S₄*

*134*

θ'

*H*

$L_4$

# FIG.5B

150

```
┌─────────────────────────────────┐
│    OBTAIN  A  PLURALITY  OF      │  152
│  IMAGES  OF  AN  ENDFACE  OF  AN │
│  OPTICAL  COMMUNICATION  LINK    │
└─────────────────────────────────┘
                 │
                 ▼
┌─────────────────────────────────┐
│  COMPARE  THE  PLURALITY  OF     │  154
│  IMAGES  TO  IDENTIFY  A  DEFECT │
│  AND  A  SHADOW  CAST  BY  THE  DEFT │
└─────────────────────────────────┘
                 │
                 ▼
┌─────────────────────────────────┐
│  DETERMINE  A  DIMENSION  OF     │  156
│         THE  SHADOW              │
└─────────────────────────────────┘
                 │
                 ▼
┌─────────────────────────────────┐
│  DETERMINE  A  HEIGHT  OR  DEPTH │  158
│  OF  THE  DEFECT  BASED  ON  THE │
│  DIMENSION  OF  THE  SHADOW      │
└─────────────────────────────────┘
```

FIG.6

Europäisches
Patentamt

European
Patent Office

Office européen
des brevets

# EUROPEAN SEARCH REPORT

Application Number

EP 16 19 3791

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/229650 A1 (WILSON DOUGLAS H [US] ET AL) 5 September 2013 (2013-09-05) * paragraph [0057] - paragraph [0078]; figures 1-10 * | 1-15 | INV. G01M11/00 G01B11/30 G02B6/38 G01N21/958 |
| A | US 5 982 493 A (LEHNEN DAVID CHARLES [US] ET AL) 9 November 1999 (1999-11-09) * the whole document * | 1-15 | |
| A | JP S63 273047 A (HITACHI LTD) 10 November 1988 (1988-11-10) * abstract; figures 1,2 * | 1-15 | |
| A | US 5 311 286 A (PIKE JOHN N [US]) 10 May 1994 (1994-05-10) * the whole document * | 1-15 | |
| X | DE 195 34 716 A1 (AUTRONIC BILDVERARBEITUNG [DE]) 20 March 1997 (1997-03-20) * column 2, line 50 - column 3, line 63; figure 1 * | 1-15 | |
| A | US 2014/211200 A1 (KIM WONOH [US]) 31 July 2014 (2014-07-31) * the whole document * | 1-15 | TECHNICAL FIELDS SEARCHED (IPC) G01M G01B G02B G01N |
| A | EP 1 744 141 A2 (ASENTICS GMBH & CO KG [DE]) 17 January 2007 (2007-01-17) * the whole document * | 1-15 | |
| A | EP 2 322 907 A1 (VMT VISION MACHINE TECHNIC BILDVERARBEITUNGSSYSTEME GMBH [DE]) 18 May 2011 (2011-05-18) * the whole document * | 1-15 | |

The present search report has been drawn up for all claims

| Place of search | Date of completion of the search | Examiner |
|---|---|---|
| The Hague | 21 February 2017 | Gruss, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 19 3791

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2017

| Patent document cited in search report | | Publication date | Patent family member(s) | | Publication date |
|---|---|---|---|---|---|
| US 2013229650 | A1 | 05-09-2013 | US 2013229650 A1<br>US 2015367386 A1<br>WO 2013134278 A1 | | 05-09-2013<br>24-12-2015<br>12-09-2013 |
| US 5982493 | A | 09-11-1999 | NONE | | |
| JP S63273047 | A | 10-11-1988 | JP H0737891 B2<br>JP S63273047 A | | 26-04-1995<br>10-11-1988 |
| US 5311286 | A | 10-05-1994 | NONE | | |
| DE 19534716 | A1 | 20-03-1997 | DE 19534716 A1<br>EP 0764845 A2 | | 20-03-1997<br>26-03-1997 |
| US 2014211200 | A1 | 31-07-2014 | CA 2841396 A1<br>US 2014211200 A1 | | 31-07-2014<br>31-07-2014 |
| EP 1744141 | A2 | 17-01-2007 | DE 102005033061 A1<br>EP 1744141 A2 | | 25-01-2007<br>17-01-2007 |
| EP 2322907 | A1 | 18-05-2011 | NONE | | |

EPO FORM P0459

For more details about this annex : see Official Journal of the European Patent Office, No. 12/82